# EUROPÄISCHE PATENTSCHRIFT

(11) **EP 0 879 998 B1**
(45) Veröffentlichungstag und Bekanntmachung des Hinweises auf die Patenterteilung: **02.07.2003**
(21) Anmeldenummer: 98109190.3
(22) Anmeldetag: 20.05.1998
(51) Int. Cl.: F24H 3/08, F24H 8/00

(54) **Vorwärmer für Gas**
Gas preheater
Préchauffeur de gaz

(30) Priorität: 23.05.1997 DE 19721555
(43) Veröffentlichungstag der Anmeldung: 25.11.1998
(73) Patentinhaber: RUHRGAS AKTIENGESELLSCHAFT, 45138 Essen (DE)
(72) Erfinder: Weid, Manfred, 45721 Haltern (DE); Altemark, Detlef, Dr., 46284 Dorsten (DE); Bussmann, Ralph, 46514 Schermbeck (DE)
(74) Vertreter: Harlacher, Mechthild

(56) Entgegenhaltungen:
- DE-A- 2 165 172
- DE-A- 4 219 937
- FR-A- 875 865
- FR-A- 1 301 234
- US-A- 4 218 211

## Beschreibung

Die Erfindung betrifft einen Vorwärmer für Gas, insbesondere Erdgas, das in Transportund Verteilungssystemen entspannt wird, mit einem von Gas durchströmten Wärmetauscher und einem dem Wärmetauscher zugeordneten Wärmeerzeuger.

Ein derartiger Vorwärmer ist zum Beispiel aus der FR-A-875 865 bekannt.

Drosselvorgänge in Erdgastransport- und Verteilsystemen führen stets zu einer Abkühlung des Erdgases. Die Temperaturabsenkung, die bei der Drosselung bzw. Entspannung eines Gases von einem Druckniveau auf ein niedrigeres Druckniveau auftritt, wird als Joule Thomsen-Effekt bezeichnet.

Die Abkühlung des Erdgases bei der Druckabsenkung kann zur Hydratbildung, Vereisung der Leitung und zu thermischen Spannungen in den Hochdruckleitungen führen.

Um diese unerwünschten Folgen zu vermeiden, wird das Erdgas vor dem Drosselvorgang erwärmt, und zwar mittels Vorwärmanlagen, auch Vorwärmer oder Heater genannt.

Aus der Praxis sind ausschließlich indirekt beheizte Vorwärmer bekannt. Diese Vorwärmer arbeiten mit einem Wärmeträgermedium, vorwiegend Wasser, das von einem Wärmeerzeuger, beispielsweise einem Gasbrenner erhitzt wird. Das Wasser befindet sich in einem relativ großen Wasserbehälter, in dem der Wärmetauscher angeordnet ist, der von dem unter Druck stehenden Erdgas durchströmt wird. Es werden überwiegend Rohrbündel- oder Rohrschlangen-Wärmeaustauscher eingesetzt.

Die Wärmeübertragung mit Hilfe des Wassers als Wärmeträgermedium verursacht einen relativ großen apparativen Aufwand und hohe Kosten. Beispielsweise eine Füllstandniveauüberwachung, Temperaturmeß- und Begrenzungseinrichtungen, Sicherheitseinrichtungen gegen unzulässigen Druckanstieg oder ein Ausdehnungsgefäß sowie eine Pumpenanlage. Bei offenen Vorwärmern ist nachteilig, daß das Wasser laufend nachgefüllt werden muß.

Vorwärmer werden üblicherweise im Freien aufgestellt, so daß das Wasser mit Betriebshilfsstoffen wie Frostschutzmitteln und Korrosionsschutzinhibitoren versehen werden muß. Dies kann zu Entsorgungsproblemen bei Reparatur- und Wartungsmaßnahmen führen.

Hohe Kosten entstehen durch die regelmäßigen in festen Zeitabständen vorgeschriebenen technischen Überprüfungen, bei denen zur Begutachtung des Wärmetauschers der Wasserbehälter des Vorwärmers völlig entleert werden muß.

Der vom Erdgas durchströmte Wärmetauscher steht unter Zugbelastung, so daß die Gefahr der Rißbildung besteht.

Nachteilig ist weiterhin, daß die Vorwärmanlagen wegen des großen Wasserbehälters einen relativ großen Platzbedarf haben. Hinzu kommt, daß die aus der Praxis bekannten Vorwärmanlagen bedingt durch den apparativen Aufwand relativ störanfällig sind, so daß aus Sicherheitsgründen stets eine Reserveanlage vorgesehen ist.

Das große Wasservolumen führt außerdem zu einer hohen Temperaturträgheit der Vorwärmung, wodurch die Wärme nicht bedarfsgerecht bereitgestellt werden kann. Zur Abdeckung aller Betriebszustände werden die Vorwärmer deshalb auch ohne Wärmeanforderung auf eine konstante Temperatur im Stand-by-Betrieb gehalten, was zu unnötigen Wärmeverlusten führt.

Durch die Verwendung von Wasser als Wärmeträgermedium ist die Temperatur zur indirekten Wärmeübertragung auf das Brenngas auf ca. 95 °C begrenzt Dadurch sind die Wärmeübertragungsflächen und die insgesamt beheizten Flächen verhältnismäßig groß. Die Wärmeverluste sind entsprechend hoch, so daß sich ein niedriger Anlagenwirkungsgrad und Jahresnutzungsgrad ergibt.

Aufgabe der Erfindung ist es demgemäß, einen Vorwärmer zu schaffen, der bei einfachem platzsparendem und wirtschaftlichen Aufbau einen hohen Anlagenwirkungs- und Jahresnutzungsgrad erzielt.

Zur Lösung dieser Aufgabe ist der Vorwärmer nach dem Oberbegriff des Anspruches 1 dadurch gekennzeichnet, daß der Wärmeerzeuger als vom Gas umströmtes, druckfestes geschlossenes Heizrohr im Inneren des Wärmetauschers angeordnet ist.

Bei dem erfindungsgemäßen Vorwärmer wird kein Wärmeträgermedium verwendet, sondern es erfolgt der direkte Wärmeübergang vom Wärmeerzeuger auf das zu erwärmende Gas. Daher ist sowohl der Anlagenwirkungs- als auch der Jahresnutzungsgrad hoch. Der Jahresnutzungsgrad liegt deutlich über dem konventioneller Vorwärmer.

Der Vorwärmer besitzt nur wenige Komponenten und kann sehr kompakt gebaut werden. Daher ist der Platzbedarf gering. Die mit der Verwendung von Wasser als Wärmeträgermedium zusammenhängenden Nachteile werden vermieden, insbesondere der Einsatz von Betriebshilfsstoffen.

Aufgrund des kompakten Aufbaues ist der Vorwärmer sowohl für den stationären als auch den mobilen Einsatz in der Ortsgasversorgung geeignet Wenn eine entsprechende Rohrführung und geeignete Rohrstutzen vorhanden sind, kann der Vorwärmer direkt im Leitungsnetz betrieben werden.

Durch die direkte Beheizung kann die Wärmeübertragungsleistung den 3 bis 5fachen Wert gegenüber einer Heizung mit Wasser als Wärmeträgermedium annehmen, so daß der Wärmetauscher einfacher und kompakter gebaut werden kann.

Da der Vorwärmer nur geringe wärmespeichernde Anlagenmassen besitzt, ist der Vorwärmer nach Inbetriebnahme schnell verfügbar. Aufgrund der schnellen Betriebsbereitschaft ist kein mit Verlusten behafteter Reserve- oder Leerlaufbetrieb einer Zweitanlage erforderlich.

Aufgrund des einfachen Aufbaus ist der Vorwärmer wartungsfreundlich. Dadurch werden störungsbedingte Stillstandszeiten verringert.

Das als Wärmeerzeuger verwendete geschlossene Heizrohr wird vielfach in Industrieöfen zur indirekten Beheizung von Wärmebehandlungsöfen verwendet. Heizrohre sind technische ausgereift und besitzen eine hohe Gebrauchstauglichkeit und Zuverlässigkeit sowie einfache Wartungs- und Inspektionsmöglichkeiten durch leichte einseitige Zugänglichkeit.

Vorzugsweise ist der Vorwärmer dadurch gekennzeichnet, daß in dem rohrförmig ausgebildeten Wärmetauscher konzentrisch das Heizrohr angeordnet ist, derart, daß sich ein Ringspalt zwischen Wärmetauscher und Heizrohr bildet und daß das Heizrohr einen Brenner aufweist, der mit einer Brenngas-, einer Verbrennungsluft-, und einer Abgasleitung verbunden ist und an den sich ein Flammrohr anschließt, das von einem geschlossenen druckfesten Mantelrohr umgeben ist.

In dem Ringspalt zwischen Wärmetauscher und Heizrohr erlangt das zu erwärmende Gas eine hohe Strömungsgeschwindigkeit, so daß ein gutes Wärmeübergangsverhalten erreicht wird.

Das Mantelrohr ist wegen der notwendigen Druckfestigkeit gegenüber dem unter Druck stehenden Gas vorzugsweise aus Metall, nach Bedarf aus wärmebeständigem bzw. korrosionsbeständigem Stahl. Das Mantelrohr wird statisch günstig von außen auf Druck beansprucht.

Vorteilhafterweise ist zwischen Wärmetauscher und Heizrohr ein Strömungsrohr angeordnet, das die Breite des Ringspaltes für die Gasströmung begrenzt. Das Strömungsrohr gewährleistet die gleichmäßige Anströmung des Heizrohres und dient zur Anpassung der Strömung des Gases im Ringspalt an die unterschiedlichen Betriebsdrücke. Damit ist eine Anpassung an unterschiedliche Betriebsbedingungen ohne Änderungen der Konstruktion möglich.

In der industriellen Ofentechnik werden standardmäßig Strahlheizrohre von 20 bis 250 kW eingesetzt. Zur Bereitstellung höherer Wärmeleistungen wird der Vorwärmer modular aus mehreren Heizrohren aufgebaut.

Eine besonders vorteilhafte Weiterbildung der Erfindung ist gekennzeichnet durch mehrere parallel zueinander angeordnete Wärmetauscher. Diese Anordnung ermöglicht den modularen Aufbau des Vorwärmers bzw. der Vorwärmanlage entsprechend den jeweiligen Anforderungen. Um Regelungs- und Bauaufwand zu begrenzen und eine schnelle Austauschbarkeit im Störfall zu gewährleisten, ist es vorteilhaft, Heizrohre identischer Leistung und Baugröße einzusetzen. Die erforderliche Anzahl an Heizrohren hängt von der Brennerleistung und dem maximal erforderlichen Wärmebedarf der Anlage ab.

Die Heizrohre bzw. Wärmetauscher können sowohl waagerecht als auch senkrecht angeordnet sein. Bei einer waagerechten Anordnung kann es vorteilhaft sein, je Wärmetauscher zwei Heizrohre anzuordnen, die von je einer Seite in den Wärmetauscher hineingesteckt werden.

Eine vorteilhafte konstruktive Ausgestaltung besteht darin, daß die Wärmetauscher eingangsseitig an eine Gaszutrittsleitung und ausgangsseitig an eine Gasaustrittsleitung angeschlossen sind.

Abweichend davon besteht auch die Möglichkeit, den Wärmetauscher mäanderförmig auszubilden und zwischen Eintritt und Austritt mehrere Heizrohre in Strömungsrichtung des Erdgases hintereinander anzuordnen.

Die Regelung der Gastemperatur am Austritt des Vorwärmers kann beispielsweise durch eine Steuerung realisiert werden, bei der die einzelnen Brenner automatisch zuoder abgeschaltet bzw. bedarfsgerecht in Zeitintervallen getaktet werden. Alternativ dazu ist eine stetige Steuerung der Heizleistung oder eine Kombination zwischen Taktbetrieb und stetiger Steuerung der Heizleistung möglich.

Anzahl und Baugröße der Heizrohre müssen dabei so bemessen sein, daß ihre Wärmeleistungen zuzüglich der wärmespeichernden Anlagenmassen ausreichen, um im ungünstigsten Betriebsfall die Stillstandsdauer eines Heizrohres so zu überbrücken, daß die Absenkung der Gastemperatur am Austritt innerhalb des zulässigen Regelbereichs bzw. Grenzbereichs verbleibt.

Vorzugsweise ist im Bereich des Brenners ein Rekuperator zum Wärmetausch zwischen Abgas und Verbrennungsluft angeordnet. Dadurch kann ein hoher steuerungstechniser Wirkungsgrad von über 85 % erreicht werden.

Durch weitere in den Unteransprüchen aufgeführten Maßnahmen sind vorteilhafte Weiterbildungen des im Hauptanspruch angegebenen Vorwärmers möglich.

Die Erfindung wird im folgenden anhand von drei bevorzugten Ausführungsbeispielen eines erfindungsgemäßen Vorwärmers im Zusammenhang mit der beiliegenden Zeichnung näher erläutert. Die Zeichnung zeigt in:
- Fig. 1 einen Vorwärmer in einer schematischen Draufsicht - teilweise im Schnitt - nach einer ersten Ausführungsform;
- Fig. 2 einen Vorwärmer in einer schematischen Seitenansicht nach einer zweiten Ausführungsform;
- Fig. 3 einen Vorwärmer in einer schematischen Draufsicht nach einer dritten Ausführungsform,
- Fig. 4 einen Schnitt A - B in Fig. 3,
- Fig. 5 einen Schnitt durch einen Vorwärmer in einer weiteren Ausführungsform,
- Fig. 6 eine vergrößerte Darstellung der Einzelheit "A" in Fig. 5,
- Fig. 7 eine vergrößerte Darstellung der Einzelheit "B" in Fig. 5,
- Fig. 8 ein schematisches Regelungsschema.

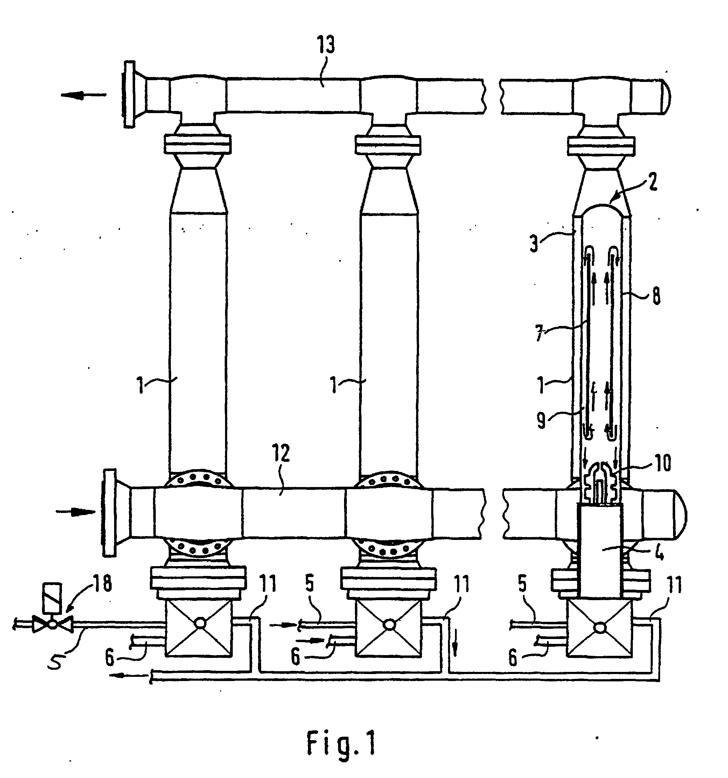

Bei dem Vorwärmer in den Ausführungsformen nach den Fig. 1 bis 8 handelt es sich um einen Erdgas-Vorwärmer, der beispielsweise bei der Druckreduzierung in Gas-, Druckregel- oder Gasmeßanlagen zur Kompensation der bei der Entspannung des Erdgases auftretenden Abkühlung betrieben wird.

Für Erdgase der zur Zeit üblichen Zusammensetzung kann bis zu Drücken von ca. 100 bar mit einem Nährungswert für die Abkühlung von 0,4 bis 0,6 K/bar gerechnet werden. Je nach Druckabsenkung beispielsweise vom Übergang von einer Transportleitung auf eine örtliche Versorgungsleitung muß das Erdgas vor der Entspannung um ca. 15 bis 50 °C erwärmt werden, so daß nach der Entspannung die Temperatur des Gases den jeweils geforderten Wert, z. B. 7 °C nicht unterschreitet.

Der Vorwärmer nach Fig. 1 weist drei rohrförmig ausgebildete Wärmetauscher 1 auf, die parallel zueinander angeordnet sind.

In jedem Wärmetauscher 1 ist konzentrisch ein Heizrohr 2 angeordnet, derart, daß sich ein Ringspalt 3 zwischen Wärmetauscher 1 und Heizrohr 2 bildet.

Jedes Heizrohr weist einen Brenner 4 auf, dem Brenngas über die Brenngasleitung 5 und Verbrennungsluft über die Verbrennungsluftleitung 6 zugeführt wird. Die Verbrennungsluftleitungen 6 werden an eine nicht dargestellte zentrale Luftleitung angeschlossen, in der sich ein Gebläse befindet. Es besteht auch die Möglichkeit, für jedes Heizrohr jeweils ein Gebläse vorzusehen. In den Brenngasleitungen 5 befinden sich je eine Regelarmatur 18 zur Steuerung des Brenngasmengenstromes. An den Brenner 4 schließt sich ein feuerfestes Flammrohr 7 an, das von einem druckfesten Mantelrohr 8 aus Metall umgeben ist.

Das Abgas aus dem Brenner wird durch das in Fig. 1 dargestellte. Flammrohr 7 bis zum Ende des Mantelrohres 8 geführt, dort umgelenkt und in einem Spalt 9 zwischen Flammrohr 7 und Mantelrohr 8 zurückgeführt. In einem Rekuperator 10 wird die Verbrennungsluft vorgewärmt. Das abgekühlte Abgas wird über ein Abgasrohr 11 in die Umgebung abgeführt.

Um Regelungs- und Bauaufwand zu begrenzen und eine schnelle Austauschbarkeit im Störfall zu gewährleisten, werden Heizrohre identischer Leistung und Baugröße eingesetzt.

Die drei parallel zueinander angeordneten Wärmetauscher 1 sind eingangsseitig an eine Gaszutrittsleitung 12 und ausgangsseitig an eine Gasaustrittsleitung 13 angeschlossen.

Das Erdgas strömt parallel durch alle drei Wärmetauscher 1 in dem Ringspalt 3 zwischen Heizrohr 2 und Wärmetauscher 1. Es erlangt dort eine hohe Strömungsgeschwindigkeit.

Zur Vermeidung der thermischen Erdgas-Zersetzung und der damit verbundenen Rußbildung wird die Außentemperatur des Mantelrohres begrenzt. Je nach der Zusammensetzung des Erdgases kann die max. Außentemperatur des Mantelrohres 150 bis 350 °C betragen. Die Wärmeübertragung auf das Erdgas auf der Außenseite des Mantelrohres erfolgt vorwiegend über Konvektion. Da die Temperaturdifferenz zwischen Heizrohr und Gas relativ groß ist, wird ein gutes Wärmeübergangsverhalten erreicht. Das gleiche gilt für die Innenseite des Mantelrohres. Durch die hohe Temperatur des Flammrohres 7 wird hier die Wärme überwiegend durch Strahlung übertragen.

In der Gaszu- bzw. der Gasaustrittsleitung können die Druckverhältnisse, z. B. durch Drosselung so eingestellt werden, daß die einzelnen Wärmetauscher mit gleichen Erdgasmengen durchströmt und damit auch wärmemäßig gleichmäßig belastet werden.

Für Wartungsarbeiten kann die Erdgasmenge in der Gaszu- bzw. der Gasaustrittsleitung durch nicht dargestellte Absperrorgane, z. B. Schiebe- oder Steckscheiben abgesperrt werden. Nach Bedarf kann auch jeder einzelne Wärmetauscher durch ein Absperrorgan eingangsseitig oder ausgangsseitig abgesperrt werden.

Zur Verringerung der Temperatur des Wärmetauschers und der Abstrahlverluste kann zwischen Wärmetauscher und Heizrohr ein Strahlungsschutz z. B. ein Lochblech vorgesehen werden.

Der Wärmeübergang kann weiter verbessert werden, indem im Ringspalt 3 zwischen Wärmetauscher 1 und Heizrohr 2 sowie im Spalt 9 zwischen Flammrohr 7 und Mantelrohr 8, Drähte oder Flügel angeordnet werden.

Als Alternative kann die Außenseite und/oder die Innenseite des Mantelrohres 6 mit Rippen versehen werden.

Vorteilhaft ist weiterhin, wenn das Mantelrohr 8 und/oder das Flammrohr 7 eine dunkle Oberfläche aufweist.

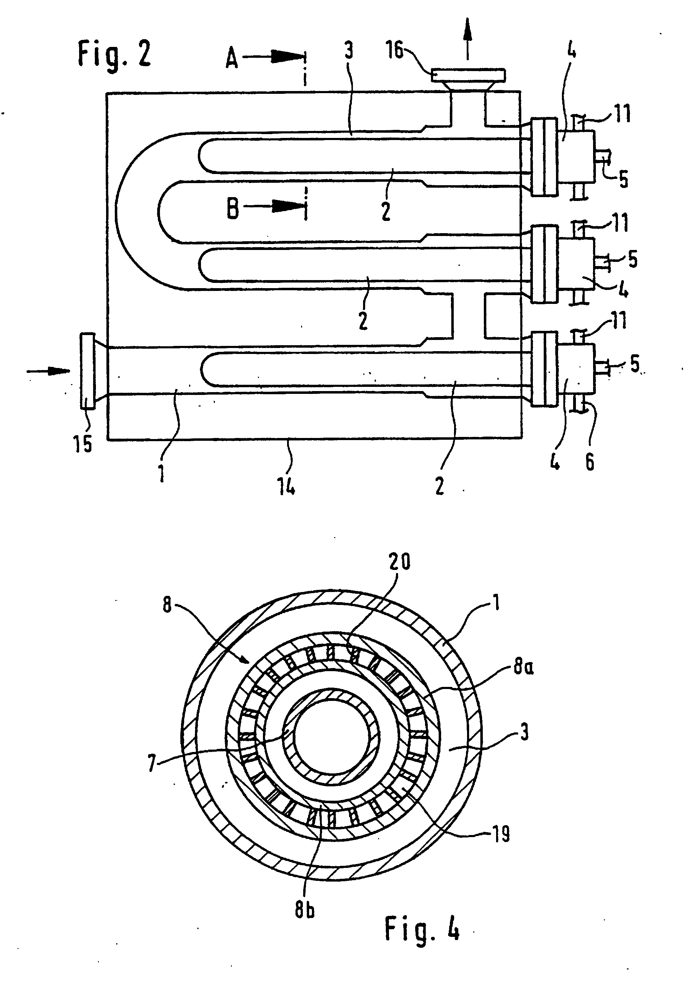

Bei dem Vorwärmer nach der Ausführungsform nach Fig. 2 ist in einem Gehäuse 14 ein mäanderförmiger Wärmetauscher 1 mit einem Gaseintritt 15 und einem Gasaustritt 16 angeordnet.

Zwischen dem Gaseintritt 15 und dem Gasaustritt 16 wird der Erdgasstrom entlang mehrerer hintereinander angeordneter Heizrohre entlanggeführt. Die Heizrohre 2 weisen den gleichen Aufbau auf wie die Heizrohre 2, die im Zusammenhang mit Fig. 1 beschrieben worden sind.

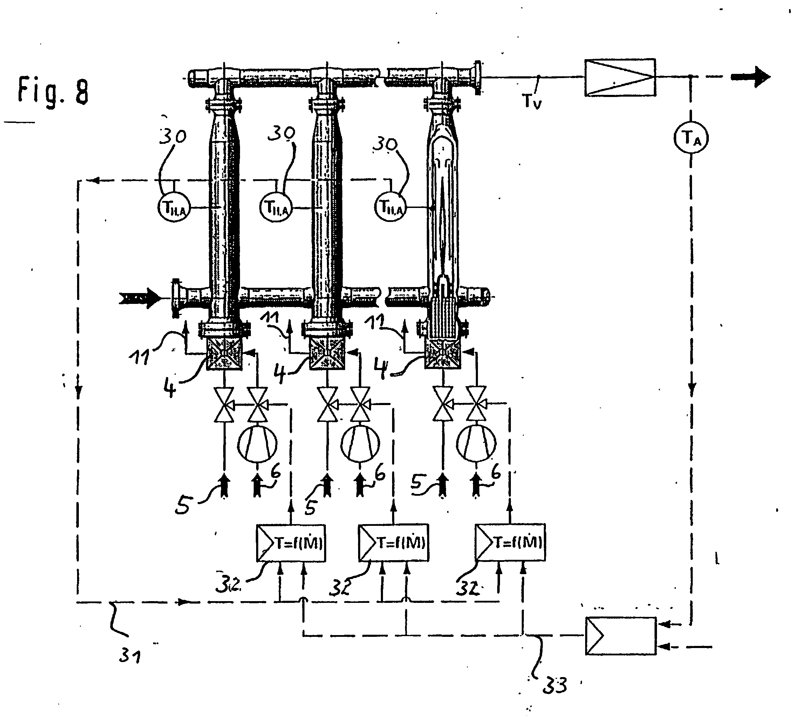

Die Regelung der Gasaustrittstemperatur Tᵥ gemäß Fig. 8 erfolgt durch Anpassung der Brennerleistung an den aktuellen Wärmebedarf. Dies wird grob durch Zu- und Abschaltung einzelner Brenner bzw. fein durch Taktsteuerung mit zeitlich veränderlichen Schaltzyklen und/oder stetige Steuerung der Brennerleistung realisiert.

Dabei werden die einzelnen Heizrohre in zwei Lastpunkten, z. B. einem Ein/Aussteuerung bzw. zwischen mehreren Punkten, z. B. aus Klein-Last, Voll-Last gesteuert. Zur gleichmäßigen Wärmebelastung ist auch eine kontinuierliche Steuerung der Brennerleistung möglich.

Einfacher und sicherer ist es, die Wandtemperatur T_{H,A} des Heizrohres bzw. Mantelrohres zur Regelung zu verwenden, da diese Temperatur aus Sicherheitsgründen ohnehin gemessen wird. Versuche haben gezeigt, daß mit Hilfe der Oberflächentemperatur eine relativ genaue und schnelle Regelung möglich ist. Auf diese Weise kann der Brenner jeden Heizrohres auf einfache Weise individuell geregelt werden.

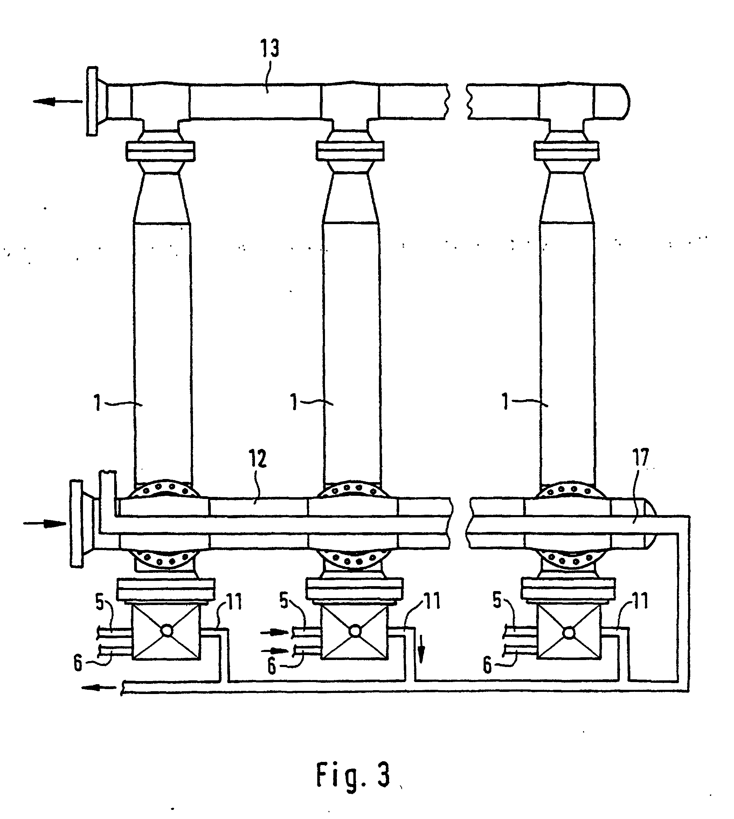

Bei der Ausführungsform des Wärmetauschers nach Fig. 3 wurde auf die Rekuperatoren 8 in den Heizrohren 2 verzichtet. Das durch die Abgasleitungen 11 strömende Abgas wird durch einen zentralen Abgaswärmetauscher 17 geführt, der konzentrisch in der Gaszutrittsleitung angeordnet ist. Der Abgaswärmetauscher kann beispielsweise als Rippenrohr ausgebildet sein. Er muß so dimensioniert werden, daß der Taupunkt des Abgases nicht unterschritten wird. Der Wirkungsgrad des Vorwärmers kann durch eine derartige Abgasführung wesentlich gesteigert werden.

Zur Einhaltung der aus sicherheitstechnischen Gründen max. zulässigen Heizrohrtemperatur sind verschiedene Sicherheitseinrichtungen möglich:

Beispielsweise kann am Erdgaseintritt des Vorwärmers ein Strömungswächter angeordnet sein, der dem Brennerbetrieb nur bei Überschreitung vor eingestellter Mindestsdurchflußmengen ermöglicht.

Weiterhin kann außen und/oder innen am Mantelrohr ein Temperaturfühler zur Messung der Wandtemperatur angebracht sein.

Aus den Meßwerten der Temperaturfühler kann die Temperaturdifferenz gebildet und daraus die Wärmestromdichte des Mantelrohres berechnet werden. Der Wert muß mit dem Ist-Wert der Gasregelarmatur, die die Wärmebelastung des Brenners steuert, korrelieren. Beide Werte können mit Grenzwerten verglichen werden. Bei Überschreiten eines Grenzwertes wird ein Signal ausgegeben und beim Überschreiten eines weiteren Grenzwertes automatisch der Brenner abgeschaltet.

Ebenso kann mit der Wärmestromdichte eine Wärmebilanz erstellt werden und mit dem Ist-Wert der Regelarmatur zur Steuerung des Brenngasmengenstromes verglichen werden. Beim Abweichen von den Standardwerten erfolgt die Ausgabe des Alarmsignals, und nach Überschreiten eines Grenzwertes schaltet der Brenner ab.

Weiterhin ist es sicherheitstechnisch vorteilhaft, wenn in der Abgasleitung 11 ein Sensor zur Messung der Kohlenwasserstoffe im Abgas angeordnet ist. Bei Überschreiten eines Grenzwertes wird wiederum ein Signal ausgegeben und der Vorwärmer abgeschaltet, indem die Brenner abgeschaltet und der Erdgaseintritt bzw. -austritt zum Wärmetauscher unterbrochen werden.

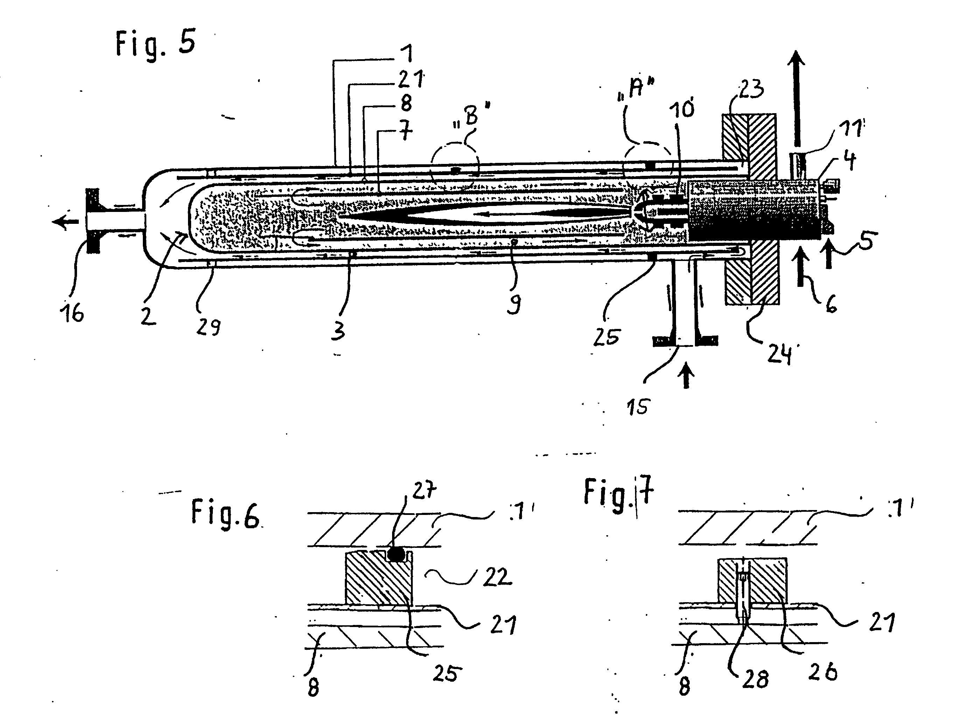

Aus Sicherheitsgründen kann das Mantelrohr 8, wie in Fig. 4 dargestellt, als konzentrisches Doppelrohr 8a, 8b mit einem Hohlraum 19 ausgebildet werden. Die Rißbildung kann kontrolliert werden, indem der Innendruck des Hohlraums 19 überwacht und mit einem Grenzwert verglichen wird. Bei Überschreiten des Grenzwertes kann ein Signal ausgegeben und der Vorwärmer abgeschaltet werden.

Es besteht weiterhin die Möglichkeit, den Hohlraum 19 mit einem gasförmigen oder flüssigen Medium, z. B. Inertgas zu füllen und dessen Druck zu überwachen.

Die Wärmeleitung des Doppelrohres 8a, 8b kann verbessert werden, indem, wie in Fig. 4 dargestellt, im Hohlraum 19 Rippen 20 oder Stege angeordnet sind. Die Rippen 20 oder Stege können mit beiden Rohren oder nur mit dem inneren Rohr 8b oder dem äußeren Rohr 8a verbunden sein.

Eine Verbesserung der Wärmeübertragung ist auch durch die Verwendung eines Mediums mit guten Wärmeübertragungseigenschaften möglich.

In Fig. 5 ist eine weitere Ausführungsform eines Vorwärmers dargestellt. Zwischen Wärmetauscher 1 und Heizrohr 2 bzw. Mantelrohr 8 befindet sich ein Strömungsrohr 21, das die Breite des Ringspaltes 3 begrenzt. Das Strömungsrohr 21 gewährleistet eine gleichmäßige Anströmung des Heizrohres durch das Gas und dient der Anpassung der Strömung im Ringspalt 3 an unterschiedlicher Betriebsdrücke. Dadurch ist eine Anpassung an unterschiedlicher Betriebsbedingungen ohne Änderung der Konstruktion möglich.

Das Strömungsrohr ist mittels des Elementes 25 mit dem Wärmetauscher verbunden. Das Strömungsrohr 21 kann an seinem Ende ebenso wie das Heizrohr mittels gasdurchlässiger Halterungen 29 geführt werden.

Alternativ dazu kann das Strömungsrohr 21 auch mit dem Flansch 24 des Heizrohres 2 bzw. des Mantelrohr 8 verbunden werden.
Im Bereich des Gaseintrittes 15 wird das Erdgas in eine Ringkammer 22 zwischen Strömungsrohr 21 und Wärmetauscher 1 geführt. Durch eine ringförmige Öffnung 23 gelangt das Gas in den Ringspalt 3 zwischen Heizrohr 2 und dem Strömungsrohr 21.

Nach Fig. 6 weist das Element 25, das zur Begrenzung der Ringkammer 22 dient, eine Dichtung 27 auf. Es handelt sich um eine Klemmverbindung.

Im Element 25, das die Ringkammer begrenzt, kann eine nicht dargestellte verschließbare Bypaßöffnung, deren Durchtrittsquerschnitt einstellbar sein kann, angeordnet sein.

Dadurch ist es möglich, den Gasstrom im Ringspalt 3 zu verringern. Auf einfache Art und Weise kann somit die Temperatur des Gasstroms beeinflußt werden. Alternativ dazu wäre es auch möglich, im Strömungsrohr 21 verschließbare Öffnungen vorzusehen.

Der Gasdurchtritt könnte bei einer Variante durch eine Vielzahl von über den Umfang des Strömungsrohres 21 verteilte Bohrungen im Bereich des Ringspaltes 3 und damit eine gleichmäßige Anströmung des Heizrohres gewährleistet sein.

Mit Hilfe eines Steges 26 kann das Strömungsrohr justiert werden. In Fig. 7 ist eine vergrößerte Darstellung der Einzelheit "B" dargestellt. Mittels Innensechskantschrauben 28 kann das Strömungsrohr justiert werden.

Bei der Verbrennung im Heizrohr fallen Kondensate an, wenn ein Bauteil die Taupunkttemperatur (bei Erdgas ca. 58 °C unterschreitet. Der Anfall von Kondensat wird möglichst durch entsprechende Auslegung vermieden. Falls Kondensate anfallen, können diese durch eine nicht dargestellte Öffnung im Heizrohr ablaufen. Die Kondensate können in einem Behälter gesammelt werden und bei Überschreitung einer vorgegebenen Menge kann eine Pumpe eingeschaltet werden, die das Kondensat zur Verdampfung entweder im Heizrohr oder im Abgaskamin eingedüst.

In Fig. 8 ist ein Regelungsschema für eine Vorwärmeranlage dargestellt. Zur Regelung der Erdgastemperatur wird das Prinzip der übergeordneten gleitenden Sollwertregelung angewendet. Mittels eines Temperaturfühlers 30 wird jeweils die Wandtemperatur T_{H,A} des Heizrohres gemessen. Als Temperatursensoren werden entweder Thermoelemente, Widerstandsthermometer oder IR-Strahlungsthermometer verwendet. In einem ersten Regelkreis 31 wird mittels der Regler 32 die Brenner 4 und damit die Erdgasaustrittstemperatur geregelt. Durch die Vorgabe einer maximalen Sollwerttemperatur wird gleichzeitig eine Überschreitung der zulässigen Wandtemperatur des Heizrohres 2 überwacht.

Dem Temperaturregler dieses ersten schnellen Regelkreises wird der Sollwert eines zweiten Regelkreises 33 aufgeprägt, der die Gasaustrittstemperatur TA nach der Druckreduzierung regelt. Dabei wird eine hohe Regelgüte sichergestellt.

Jedes einzelne Heizrohr ist so ausgerüstet, daß es unabhängig von den anderen parallel angeordneten Heizrohren betrieben werden kann. Beim Ausfall des übergeordneten zweiten Regelkreises 33 verharren die einzelnen Regelkreise zur Regelung der Wandtemperatur des Hei zrohres 2 bei dem zuletzt vorgegebenen und ggf. abgespeicherten Wert. Die Kombination beider Regelkreise 31 und 33 bietet die Möglichkeit, jedes Heizrohr schnell und eigensicher zu betreiben sowie Betriebsanlagen leistungsgerecht und modular aufzubauen. Letzteres wird u. a. auch dadurch erreicht, daß Verbrennungsluftgebläse, Dichtheitskontrolleinrichtungen und Armaturen an jedem Brenner vorgesehen sind.

Der Vorteil der Wandtemperaturregelung durch Steuerung der Brennerleistung besteht darin, daß bei einer vorgegebenen Druckdifferenz bei unterschiedlichen Erdgasdurchflüssen die Wärme bereits nahezu bedarfsgerecht übertragen bzw. erzeugt wird und die Erdgasaustrittstemperatur bei Ausfall des übergeordneten Regelkreises 31 in einem zulässigen Bereich bleibt.

Zur Erhöhung der Betriebssicherheit wird die Vorwärmanlage so ausgelegt, daß mindestens ein Heizrohr ausfallen kann. Dabei wird die Vorwärmeranlage so dimensioniert, daß beim Ausfall eines Heizrohres ein vorgegebener Temperaturabfall, beispielsweise 7 K, nicht unterschritten wird. Der maximale Temperaturabfall liegt der Annahme zugrunde, daß in Regel Erdgas eine Eintrittstemperatur von 7 °C aufweist und beim Ausfall eines Heizrohres dadurch die zulässige Temperatur von 0 °C nicht unterschritten wird.

Als kleinste Anlage ist eine Zwei-Rohr-Anlage anzusehen. Wird beim Ausfall eines Heizrohres ein maximaler Leistungsabfall von 30 % zugelassen, so ist eine Überdimensionierung einer Zwei-Rohr-Anlage von 40 % und bei einer Drei-Rohr-Anlage von 5 %. Bei der Vorgabe der Zulässigkeit des Ausfalls eines Heizrohres und der angegebenen Auslegungssystematik können bei einer Zwei- und Drei-Rohr-Anlage Druckreduzierungen bis mindestens 44 bar und mit einer Fünf-Rohr-Anlage Druckreduzierungen von mindestens 70 bar (Nordsee-Erdgas H) beherrscht werden. Die maximalen Werte für eine Druckreduzierung z. B. für eine Zwei-Rohr-Anlage von 55 bar ergeben sich beim Einsatz von Holland-Erdgas L. Bei einer entsprechenden Überdimensionierung kann beispielsweise auch bereits mit einer Zwei-Rohr-Anlage der gesamte Druckreduzierungsbereich im Transportnetz abgedeckt werden.

## Patentansprüche

1. Vorwärmer für Gas, insbesondere von Erdgas, das in Transport- und Verteilungssystemen entspannt wird, mit einem von Gas durchströmten Wärmetauscher und mit einem dem Wärmetauscher zugeordneten Wärmeerzeuger,
**dadurch gekennzeichnet,**
**daß** der Wärmeerzeuger als vom Gas umströmtes, druckfestes geschlossenes Heizrohr (2) im Inneren des Wärmetauschers (1) angeordnet ist.

2. Vorwärmer nach Anspruch 1,
**dadurch gekennzeichnet,**
**daß** in dem rohrförmig ausgebildeten Wärmetauscher (1) konzentrisch das Heizrohr (2) angeordnet ist, derart, daß sich ein Ringspalt (3) zwischen Wärmetauscher (1) und Heizrohr (2) bildet und daß das Heizrohr (2) eirien Brenner (4) aufweist, der mit einer Brenngas- (5), einer Verbrennungsluft- (6) und einer Abgasleitung (11) verbunden ist und an den sich ein Flammrohr (7) anschließt, das von einem geschlossenen druckfesten Mantelrohr (8) umgeben ist, derart, daß sich ein Spalt (9) bildet.

3. Vorwärmer nach Anspruch 3,
**dadurch gekennzeichnet,**
**daß** zwischen Wärmetauscher (1) und Heizrohr (2) ein Strömungsrohr (21) angeordnet ist, das die Breite des Ringspaltes (3) für die Gaströmung begrenzt.

4. Vorwärmer nach Anspruch 3,
**dadurch gekennzeichnet,**
**daß** im Wärmetauscher (1) im Bereich des Gaseintrittes (15) zwischen Wärmetauscher (1) und Strömungsrohr (21) ein Ringkammer (22) ausgebildet ist und daß das Strömungsrohr (21) im Bereich der Ringkammer (22) mindestens eine Durchströmöffnung (23) aufweist.

5. Vorwärmer nach Anspruch 4,
**dadurch gekennzeichnet,**
**daß** die Ringkammer (22) mittels eines gasdicht zwischen Wärmetauscher (1) und Strömungsrohr (21) angeordneten Elementes (25) gebildet wird.

6. Vorwärmer nach Anspruch 5,
**dadurch gekennzeichnet,**
**daß** im Element (25) eine verschließbare Bypaßöffnung vorgesehen ist, deren Durchtrittsquerschnitt einstellbar ist.

7. Vorwärmer nach einem der Ansprüche 2 bis 6,
**dadurch gekennzeichnet,**
**daß** im Heizrohr (2) im Bereich des Brenners (4) ein Rekuperator (10) zum Wärmetausch zwischen Abgas und Verbrennungsluft angeordnet ist.

8. Vorwärmer nach einem der Ansprüche 1 bis 7,
**gekennzeichnet durch** mehrere parallel zueinander angeordnete Wärmetauscher (1), die eingangsseitig an eine Gaszutrittsleitung (12) und ausgangsseitig an eine Gasaustrittsleitung (13) angeschlossen sind.

9. Vorwärmer nach Anspruch 8,
**dadurch gekennzeichnet,**
**daß** in der Gaszutrittsleitung (12) konzentrisch ein Abgaswärmetauscher (17) angeordnet ist.

10. Vorwärmer nach einem der Ansprüche 1 bis 7,
**dadurch gekennzeichnet,**
**daß** der Wärmetauscher mäanderförmig ausgebildet ist und daß zwischen einem Gaseintritt (15) und Gasaustritt (16) mehrere Heizrohre (2) in Strömungsrichtung des Erdgases hintereinander angeordnet sind.

11. Vorwärmer nach einem der Ansprüche 1 bis 10,
**dadurch gekennzeichnet,**
**daß** in dem Ringspalt (3) ein Strahlungsschutz vorgesehen ist.

12. Vorwärmer nach einem der Ansprüche 2 bis 10,
**dadurch gekennzeichnet,**
**daß** im Ringspalt (3) und/oder im Spalt (9) Drähte oder Flügel angeordnet sind.

13. Vorwärmer nach einem der Ansprüche 2 bis 10,
**dadurch gekennzeichnet,**
**daß** die Außenseite und/oder die Innenseite des Mantelrohres (8) Rippen aufweist.

14. Vorwärmer nach einem der Ansprüche 2 bis 13,
**dadurch gekennzeichnet,**
**daß** das Mantelrohr (8) und/oder das Flammrohr (7) eine dunkle Oberfläche aufweist.

15. Vorwärmer nach einem der Ansprüche 2 bis 14,
**dadurch gekennzeichnet,**
**daß** außen und/oder innen am bzw. im Mantelrohr (8) ein Temperaturfühler zur Messung der Wandtemperatur angebracht ist.

16. Vorwärmer nach Anspruch 14,
**dadurch gekennzeichnet,**
**daß** die Wandtemperatur zur Regelung der Gastemperatur benutzt wird.

17. Vorwärmer nach Anspruch 15,
**dadurch gekennzeichnet,**
**daß** aus den Meßwerten der Temperaturfühler außen und innen am Mantelrohr (8) die Temperaturdifferenz gebildet wird, daß die Wärmestromdichte des Mantelrohres (8) berechnet sowie mit mindestens einem Grenzwert verglichen wird und daß bei Überschreiten des Grenzwertes ein Signal ausgegeben wird.

18. Vorwärmer nach einem der Ansprüche 2 bis 17,
**dadurch gekennzeichnet,**
**daß** das Mantelrohr (8) des Heizrohres (2) als konzentrisches Doppelrohr mit einem Hohlraum (19) ausgebildet ist, der vorzugsweise mit einem gasförmigen oder flüssigen Medium gefüllt ist.

19. Vorwärmer nach Anspruch 18,
**dadurch gekennzeichnet,**
**daß** der Innendruck des Hohlraumes (19) überwacht sowie mit einem Grenzwert verglichen wird und daß bei Überschreiten des Grenzwertes ein Signal ausgegeben wird.

20. Vorwärmer nach einem der Ansprüche 18 oder 19,
**dadurch gekennzeichnet,**
**daß** im Hohlraum (19) Rippen (20) oder Stege angeordnet sind.

21. Vorwärmer nach einem der Ansprüche 2 bis 20,
**dadurch gekennzeichnet,**
**daß** in der Abgasleitung (11) ein Sensor zur Messung der Kohlenwasserstoffe im Abgas angeordnet ist und daß bei Überschreiten eines Grenzwertes ein Signal ausgegeben wird.

22. Vorwärmer nach einem der Ansprüche 1 bis 21,
**dadurch gekennzeichnet,**
**daß** im Heizrohr (2) eine Öffnung vorgesehen ist, an die ein Kondensat-Sammelbehälter angeschlossen ist, daß sich im Kondensat-Sammelbehälter eine Pumpe befindet, die das Kondensat zur Verdampfung entweder im Heizrohr oder im Abgas eindüst.

## Claims

1. Preheater for gas, in particular natural gas, whose pressure is reduced in transmission and distribution systems, with a heat exchanger through which the gas passes and with a heat generator assigned to the heat exchanger,
**characterised in that**
the heat generator is arranged as a pressure-proof enclosed heating tube (2) which is located inside the heat exchanger (1) and around which the gas passes.

2. Preheater according to claim 1,
**characterised in that**
the heating tube (2) is arranged concentrically in the tubular heat exchanger (1) in such a manner that an annular gap (3) forms between the heat exchanger (1) and the heating tube (2) and that the heating tube (2) exhibits a burner (4) which is connected to a fuel gas line (5), a combustion air line (6) and a flue gas line (11) and adjoins a flame tube (7) which is surrounded by an enclosed pressure-proof sleeve pipe (8) in such a manner that a gap (9) forms.

3. Preheater according to claim 3,
**characterised in that**
a flow tube (21) is arranged between the heat exchanger (1) and the heating tube (2), said flow tube (21) limiting the width of the annular gap (3) for gas flow.

4. Preheater according to claim 3,
**characterised in that**
an annular chamber (22) is formed in the heat exchanger (1) in the area of gas entry (15) between the heat exchanger (1) and the flow tube (21) and that the flow tube (21) exhibits at least one opening (23) through which the gas can flow in the area of the annular chamber (22).

5. Preheater according to claim 4,
**characterised in that**
the annular chamber (22) is formed by means of an element (25) arranged gas-tight between the heat exchanger (1) and the flow tube (21).

6. Preheater according to claim 5,
**characterised in that**
a closable bypass opening is provided in the element (25) the cross section of which can be adjusted.

7. Preheater according to any one of claims 2 through 6,
**characterised in that**
a recuperator (10) for heat exchange between the flue gas and the combustion air is arranged in the heating tube (2) in the area of the burner (4).

8. Preheater according to any one of claims 1 through 7,
**characterised by** several heat exchangers (1) arranged parallel to each other which are connected on the inlet side to a gas supply line (12) and on the outlet side to a gas discharge line (13).

9. Preheater according to claim 8,
**characterised in that**
a flue gas heat exchanger (17) is arranged concentrically in the gas supply line (12).

10. Preheater according to any one of claims 1 through 7,
**characterised in that**
the heat exchanger is serpentine-shaped and that several heating tubes (2) are arranged one behind the other between a gas inlet (15) and a gas outlet (16) in the direction of flow of the natural gas.

11. Preheater according to any one of claims 1 through 10,
**characterised in that**
a radiation protection is provided in the annular gap (3).

12. Preheater according to any one of claims 2 through 10,
**characterised in that**
wires or wings are arranged in the annular gap (3) and/or in the gap (9).

13. Preheater according to any one of claims 2 through 10,
**characterised in that**
the outside and/or the inside of the sleeve pipe (8) exhibits ribs.

14. Preheater according to any one of claims 2 through 13,
**characterised in that**;
the sleeve pipe (8) and/or the flame tube (7) exhibits a dark surface.

15. Preheater according to any one of claims 2 through 14,
**characterised in that**
a temperature sensor to measure the wall temperature is arranged outside and/or inside on or in the sleeve pipe (8).

16. Preheater according to claim 14,
**characterised in that**
the wall temperature is used to control the gas temperature.

17. Preheater according to claim 15,
**characterised in that**
the temperature difference is formed from the measured values of the temperature sensors outside and inside on the sleeve pipe (8), that the heat flux density of the sleeve pipe (8) is calculated and compared with at least one limiting value and that a signal is emitted when the limiting value is exceeded.

18. Preheater according to any one of claims 2 through 17,
**characterised in that**
the sleeve pipe (8) of the heating tube (2) is a concentric double tube with a cavity (19) which is preferably filled with a gaseous or liquid medium.

19. Preheater according to claim 18,
**characterised in that**
the inside pressure of the cavity (19) is monitored and compared with a limiting value and that a signal is emitted when the limiting value is exceeded.

20. Preheater according to either claim 18 or 19,
**characterised in that**
ribs (20) or bridges are arranged in the cavity (19).

21. Preheater according to any one of claims 2 through 20,
**characterised in that**
a sensor to measure the hydrocarbons in the flue gas is arranged in the flue gas line (11) and that a signal is emitted when a limiting value is exceeded.

22. Preheater according to any one of claims 1 through 21,
**characterised in that**
an opening is provided in the heating tube (2), to which opening a condensate collector is connected, that a pump is located in the condensate collector which sprays the condensate for evaporation either in the heating tube or in the flue gas.

## Revendications

1. Préchauffeur de gaz, en particulier pour gaz naturel, détendu dans des réseaux de transport et de distribution, avec un échangeur de chaleur, à travers duquel passe du gaz, et un générateur de chaleur attribué audit échangeur de chaleur,
**caractérisé par le fait**
**que** le générateur de chaleur, conçu sous forme de tube chauffant fermé résistant à la pression (2) et autour duquel s'écoule le gaz, est disposé à l'intérieur de l'échangeur de chaleur (1).

2. Préchauffeur de gaz suivant la revendication 1,
**caractérisé par le fait**
**que** le tube chauffant (2) est disposé, de façon concentrique, dans l'échangeur de chaleur (1) en forme de tube de la sorte que, entre l'échangeur de chaleur (1) et le tube chauffant (2) se forme un espace annulaire (3), et que le tube chauffant (2) est doté d'un brûleur (4), relié à un conduit de gaz combustible (5), un conduit d'air comburant (6) et un conduit de fumées (11), suivi d'un tube de flamme (7) enveloppé par un fourreau fermé résistant à la pression (8) de la sorte qu'il se crée une fente (9).

3. Préchauffeur de gaz suivant la revendication 2,
**caractérisé par le fait**
**que**, entre l'échangeur de chaleur (1) et le tube chauffant (2), est disposé un tube de guidage de l'écoulement (21) délimitant la largeur de l'espace annulaire (3) pour l'écoulement du gaz.

4. Préchauffeur de gaz suivant la revendication 3,
**caractérisé par le fait**
**que** dans l'échangeur de chaleur (1) au niveau de l'entrée du gaz (15) entre l'échangeur de chaleur (1) et le tube de guidage de l'écoulement (21) est formée une chambre annulaire (22), et que le tube de guidage de l'écoulement (21) présente, au niveau de la chambre annulaire (22), au moins une ouverture de passage d'écoulement (23).

5. Préchauffeur de gaz suivant la revendication 4,
**caractérisé par le fait**
**que** la chambre annulaire (22) est formée à l'aide d'un élément (25) disposé, de façon étanche au gaz, entre l'échangeur de chaleur (1) et le tube de guidage de l'écoulement (21).

6. Préchauffeur de gaz suivant la revendication 5,
**caractérisé par le fait**
**que** dans l'élément (25) est prévue une ouverture de bipasse pouvant être fermée et dont la section est réglable.

7. Préchauffeur de gaz suivant l'une des revendications 2 à 6,
**caractérisé par le fait**
**que** dans le tube chauffant (2) est disposé, au niveau du brûleur (4), un récupérateur (10) pour échanger la chaleur entre les fumées et l'air comburant.

8. Préchauffeur de gaz suivant l'une des revendications 1 à 7,
**caractérisé par**
plusieurs échangeurs de chaleur (1), disposés en parallèle les uns par rapport aux autres, raccordés en amont à une conduite d'amenée de gaz (12) et en aval à une conduite de sortie de gaz (13).

9. Préchauffeur de gaz suivant la revendication 8,
**caractérisé par le fait**
**qu'**un échangeur de chaleur de fumées (17) est disposé, de façon concentrique, dans la conduite d'amenée de gaz (12).

10. Préchauffeur de gaz suivant l'une des revendications 1 à 7,
**caractérisé par le fait**
**que** l'échangeur de chaleur est conçu sous forme de méandre et que plusieurs tubes chauffants (2) sont disposés, entre une entrée de gaz (15) et une sortie de gaz (16), les uns derrières les autres en direction d'écoulement.

11. Préchauffeur de gaz suivant l'une des revendications 1 à 10,
**caractérisé par le fait**
**qu'**une protection contre le rayonnement est prévue dans l'espace annulaire (3).

12. Préchauffeur de gaz suivant l'une des revendications 2 à 10,
**caractérisé par le fait**
**que** des fils de fer ou des ailes sont disposés dans l'espace annulaire (3) et/ou dans la fente (9).

13. Préchauffeur de gaz suivant l'une des revendications 2 à 10,
**caractérisé par le fait**
**que** la paroi extérieure et/ou la paroi intérieure du fourreau (8) présentent des nervures.

14. Préchauffeur de gaz suivant l'une des revendications 2 à 13,
**caractérisé par le fait**
**que** le fourreau (8) et/ou le tube de flamme (7) présentent une surface sombre.

15. Préchauffeur de gaz suivant l'une des revendications 2 à 14,
**caractérisé par le fait**
**que** le fourreau (8) est équipé à l'extérieur et/ou à l'intérieur d'un capteur de température pour mesurer la température de la paroi.

16. Préchauffeur de gaz suivant la revendication 14,
**caractérisé par le fait**
**que** la température de la paroi est utilisée pour régler la température du gaz.

17. Préchauffeur de gaz suivant la revendication 15,
**caractérisé par le fait**
**que** la différence de température est déterminée à l'aide des valeurs mesurées par les capteurs de température à l'extérieur et à l'intérieur du fourreau (8), que la densité du flux thermique du fourreau (8) est calculée et comparée avec au moins une valeur limite, et qu'un signal est émis en cas de dépassement de la valeur limite.

18. Préchauffeur de gaz suivant l'une des revendications 2 à 17,
**caractérisé par le fait**
**que** le fourreau (8) du tube chauffant (2) est conçu sous forme de double tube concentrique avec un espace creux (19) rempli, de préférence, d'un fluide gazeux ou liquide.

19. Préchauffeur de gaz suivant la revendication 18,
**caractérisé par le fait**
**que** la pression interne de l'espace creux (19) est surveillée et comparée avec une valeur limite, et qu'un signal est émis en cas de dépassement de la valeur limite.

20. Préchauffeur de gaz suivant l'une des revendications 18 ou 19,
**caractérisé par le fait**
**que** des nervures (20) ou des ailettes sont disposées dans l'espace creux (19).

21. Préchauffeur de gaz suivant l'une des revendications 2 à 20,
**caractérisé par le fait**
**qu'**un capteur pour mesurer les hydrocarbures contenus dans les fumées est disposé dans le conduit de fumées (11) et qu'un signal est émis en cas de dépassement d'une valeur limite.

22. Préchauffeur de gaz suivant l'une des revendications 1 à 21,
**caractérisé par le fait**
**que** dans le tube chauffant (2) est prévue une ouverture, à laquelle est raccordé un réservoir de collecte de condensat, et que dans le réservoir de collecte de condensat se trouve une pompe pour injecter le condensat pour le vaporiser soit dans le tube chauffant soit dans les fumées.
